**Europäisches Patentamt**

(19) **European Patent Office**

**Office européen des brevets**

(11) Numéro de publication: **0 040 576**
**B1**

(12) **FASCICULE DE BREVET EUROPEEN**

(45) Date de publication du fascicule du brevet:
**23.01.85**

(51) Int. Cl.⁴: **B 65 G 1/04**

(21) Numéro de dépôt: **81420076.2**

(22) Date de dépôt: **19.05.81**

(54) **Procédé et dispositif de manutention de produits longs, notamment de tubes.**

(30) Priorité: **20.05.80 FR 8011241**

(43) Date de publication de la demande:
**25.11.81 Bulletin 81/47**

(45) Mention de la délivrance du brevet:
**23.01.85 Bulletin 85/4**

(84) Etats contractants désignés:
**AT BE DE GB IT NL SE**

(56) Documents cités:
**FR - A - 2 169 671**

(73) Titulaire: **VALLOUREC Société Anonyme dite., 7, place du Chancelier Adenauer, F-75116 Paris (FR)**

(72) Inventeur: **Huot, Joseph, 2, Parc Joumelle, F-21500 Montbard (FR)**
Inventeur: **Pinay, Roger, 11, rue de l'Hôtel de Ville, F-51300 Vitry-Le-Francois (FR)**

(74) Mandataire: **de Passemar, Bernard, VALLOUREC 7 Place du Chancelier Adenauer, F-75016 Paris (FR)**

BUNDESDRUCKEREI BERLIN

## Description

La présente invention est relative à un procédé et à un dispositif de manutention de tubes ou produits longs similaires, en particulier pour transférer des tubes d'un poste de travail à un autre, notamment dans une installation de production de tels tubes.

La présente invention est destinée à permettre le transfert aussi bien de tubes droits que de tubes cintrés, par exemple des tubes cintrés à 180° ou épingles et destinés notamment à réaliser des échangeurs de chaleur, en particulier dans des centrales nucléaires.

Le transfert de tubes droits s'effectue en général dans l'industrie sur des grilles, c'est-à-dire des surfaces sur lesqelles les tubes sont amenés à se déplacer soit par gravité soit un étant entraînés par des organs pousseurs. Ces grilles nécessitent une surface installée au sol importante entre les différents postes de traivail. En outre, au cours de leur déplacement sur les grilles, notamment lorsque celuici s'effectue par gravité, les tubes sont sujets à des chocs nuisant à leur qualité finale.

Dans la fabrication de tubes cintrés, notmannent de tubes cintrés à 180°, il est usuel en fin de fabrication de conditionner de tels tubes dans des caisses dans lesquelles les tubes mêmes caractéristiques, c'est-à-dire de même rayon de cintrage sont empilés verticalement, la caisse comportant ainsi plusieurs empilements de tubes de rayons de cintrage différents disposés concentriquement et maintenus espacés par des cales de positionnement prévues à cet effet.

Traditionnellement detels tubes en fin de fabrication, c'est-à-dire après avoir subi les derniers contrôles de qualité, sont transférés manuellement individuellement ou en vrac du dernier poste de la ligne de fabrication jusqu'au poste de colisage où ils sont mis en caisse. Cette opération nécessite de la main-d'œuvre et est relativement longue dans la mesure où chacun des tubes est manipulé individuellement. De plus, cette manipulation provoque souvent des chocs se traduisant par des déformations du tube, c'est-à-dire principalement des irrégularités de rayon de cintrage dans le cas de tubes cintrés. Du fait de ces déformations des parties cintrées provoquées par la manutention, on a constaté en cours d'utilisation des tubes dans des échangeurs de chaleur que ceux-ci, au lieu de se trouver comme prévu théoriquement du fait de leurs rayons de cintrage, à une certaine distance les uns des autres, viennent en fait en contact. De tels contacts prolongés entraînent une détérioration des tubes de l'échangeur avec toutes les conséquences imaginables pour l'ensemble de l'installation.

Le brevet français n° 2 169 671 décrit un procédé pour transférer des tubes, du type énoncé dans le préambule de la revendications. Dans ce procédé un container plein permet le transfert de tubes vers un compartiment de stockage-triage de tubes.

Ce container qui est constitué d'une armature de longueur fixe ouverte à la partie inférieure est fermé sur ses petits côtés par des plaques latérales.

Des broches axiales rétractables s'engageant à l'intérieur du tube inférieur maintiennent en place les tubes en nappe pendant le transport.

Un tel container n'est pas utilisable de par sa forme pour la manutention de tubes cintrés.

Ne pouvant admettre que des tubes à longueur fixe, il n'est pas plus utilisable pour la manutention de produits longs, barres ou tubes dont les longueurs peuvent varier, les broches d'extrémités ne pouvant soutenir les produits pendant le transport.

La présente invention se propose de fournir un procédé et un dispositif pour transférer des tubes et produits longs similaires, tels que par exemple des barres, permettant précisément d'éviter les inconvénients mentionnés ci-dessus, et utilisables aussi bien pour des tubes droits que pour des tubes cintrés de forme et de dimensions quelconques.

Selon l'invention le procédé pour transférer les produits longs tels que des tubes ou des barres de longueur et de forme quelconques d'un poste de travail de départ à un autre poste de travail d'arrivée met en œuvre un dispositif de transfert à l'intérieur duquel est constituée une nappe unique de produits longs de mêmes caractéristiques, ledit dispositif de transfert étant pourvu de moyens de retenue libérables des produits longs et de moyens de suspension à un appareil de transport par voie aérienne.

On soulève la nappe de produits longs ainsi maintenue et on la transporte verticale par voie aérienne jusqu'au poste d'arrivée.

Les produits longs sont préalablement empilés au poste de départ de façon à former une nappe verticale unique destinée à être placée à l'intérieur du dispositif de transfert qui est constitué d'une pluralité de cadres rigides en forme de U que l'on met en place sur la nappe de produits longs préalablement formée, lesdits cadres en U étant répartis sur la longueur des produits longs, les moyens de retenue libérables que comportent les cadres en U étant actionnés de façon à assurer le maintien de la nappe verticale de produits longs insérés à l'intérieur desdits cadres.

Le cas échéant, notamment pour une mise en caisse, on libère les tubes de leurs cadres de maintien, ou on laisse en place les tubes dans les cadres pour une opération de manutention au poste d'arrivée, telle que l'alimentation d'une machine.

De préférence, les cadres permettant la mise en œuvre du procédé selon l'invention sont métalliques et présentent une forme de U dont la largeur intérieure entre les branches correspond au diamètre des tubes à manipuler, lesdits cadres étant munis de moyens pour leur suspension à un appareil de transport par voie aérienne, tel qu'un pont roulant ou un convoyeur, ainsi que de moyens de retenue libérables des tubes.

Le dispositif selon l'invention se caractérise par le fait qu'il comprend une pluralité de cadres présentent une forme de U dont la largeur intérieure entre les branches correspond au diamètre des tubes ou barres à manipuler, lesdits cadres étont munis de moyens pour leur suspension à un appareil de transport par voie aérienne, ainsi que de moyens de cetenue libérables des tubes ou barres. La longueur des branches des cadres est déterminée en fonction du nombre de tubes à transporter en une fois en nappe verticale et l'épaisseur de paroi des cadres est déterminée de façon à assurer une rigidité suffisante pour maintenir les tubes en une nappe verticale pendant leur transport par voie aérienne. Cette épaisseur, dans le cas de l'application à la mise en caisse de tubes cintrés à 180° doit être inférieure à l'espace laissé libre entre les cales de positionnement correspondant à deux rayons successifs afin de permettre la descente des cadres maintenant la nappe de tubes jusqu'à ce que leur extrémité inférieure vienne au voisinage du fond de la caisse.

Les moyens de retenue libérable des tubes dans chaque cadre, peuvent avantageusement être constitués par une pièce en forme de goupille susceptible d'être mise en place au voisinage de l'extrémité ouverte du cadre en vorme de U, et en travers de celle-ci. En variante, on peut prévoir à cet effet une sangle s'engageant sous la nappe de tubes. Les moyens permettant la suspension à un appareil de transport par voie aérienne étant par exemple un anneau fixé à la face externe de l'extrémité fermée de chaque cadre en U pour l'accrochage à un crochet de palonnier de pont ou d'un chariot de convoyeur. En variante, la goupille servant d'organe de libération amovible est solidaire d'un crochet de suspension, les cadres étant dans ce cas suspendus avec leurs extrémités ouvertes tournées vers le haut, tandis que dans le premier cas mentionné ci-dessus, en position suspendue, les cadres présentent leurs extrémités ouvertes, en travers desquelles sont disposées les goupilles, tournées vers le bas.

Avantageusement, au poste de départ, c'est-à-dire à partir duquel est mis en œuvre le procédé selon l'invention, les tubes sont mis en place dans des ensembles de gabarits permettant leur empilement en une nappe verticale. Les gabarits, dans lesquels les tubes sont alors amenés individuellement par le haut comportent, de préférence, des moyens pour guider la descente des tubes empilés jusqu'à ce que le premier tube mis en place parvienne au fond du gabarit. Ces moyens peuvent par exemple se présenter sous la forme d'un câble, dont l'allongement est commandé par exemple par un vérin, supportant par en-dessous les tubes empilés dans les gabarits et permettant d'assurer la descente pas à pas des tubes empilés au fur et à mesure qu'un nouveau tube vient se placer à la partie supérieure du gabarit.

Dans l'application à des tubes cintrés à 180°, on prévoit deux ensembles de gabarits, de préférence mobiles transversalement de façon à modifier la distance entre les deux ensembles de gabarits en fonction du rayon des tubes cintrés manipulés, les gabarits de chaque ensemble recevant les parties droites opposées des tubes.

Chacun des gabarits peut par exemple être constitué de deux montants verticaux dont l'écartement peut être fixe ou de préférence ré glable en fonction du diamètre des tubes à empiler.

On comprend que, grâce à la présente invention, non seulement les tubes sont transportés en groupe, ce qui réduit les temps de manipulation par rapport au transport individuel, mais que d'autre part, et surtout, l'opération de manipulation s'effectue sans intervention manuelle, ce qui réduit les risques de chocs et de déformations et permet de conserver aux tubes transférés au poste d'arrivée les qualités qu'ils possédaient au poste de départ.

Dans le but de mieux faire comprendre l'invention, on va maintenant en décrire, à titre d'exemple en aucune manière limitatif, différents modes de réalisation en se référant au dessin annexé dans lequel

la fig. 1 illustre un mode de réalisation du dispositif selon l'invention,

la fig. 2 est une vue en élévation en bout d'un cadre utilisé dans le dispositif de la fig. 1,

la fig. 3 est une vue en élévation latérale d'un cadre utilisé dans le dispositif de la fig. 1,

la fig. 4 illustre une variante de réalisation du dispositif selon l'invention,

la fig. 5 représente un poste de départ pour la mise en œuvre du procédé selon l'invention dans une installation de production de tubes cintrés à 180°,

la fig. 6 est une vue en bout dans le sens de la flèche IV de la fig. 5,

les fig. 7 à13 sont des vues schématiques illustrant les différentes étapes de mise en œuvre du procédé selon l'invention à partir du poste représenté à la fig. 5,

la fig. 14 est une vue de dessus partielle d'une caisse dans laquelle des tubes ont été empilés par le procédé selon l'invention,

la fig. 15 est une vue en élévation en bout de la caisse selon la fig. 14.

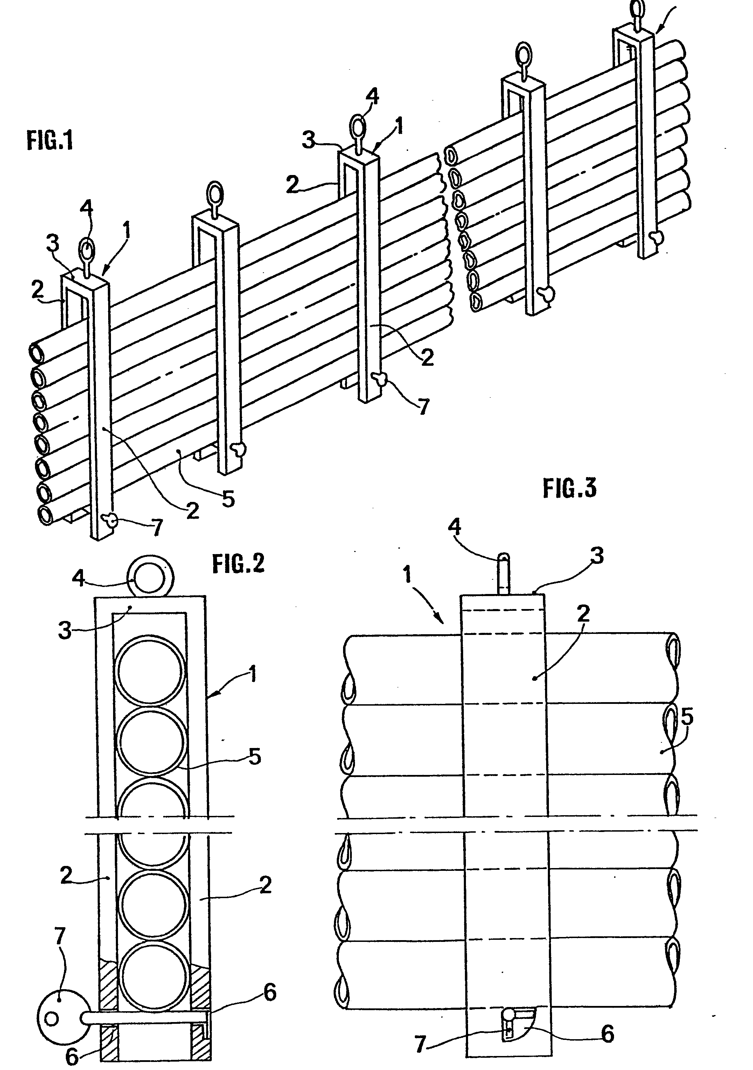

On se réfère tout d'abord aux fig. 1 à 3.

Dans ce mode de réalisation, le dispositif selon l'invention, utilisable aussi bien pour des tudes droits que pour des tubes cintrés, comprend une pluralité de cadres rigides (1), de préférence métalliques, présentant chacun la forme générale d'un U ouvert avec deux branches parallèles (2) réunies à une extrémité par une âme (3). Sur l'âme (3) de chacun des cadres (1), est monté un organe tel qu'un anneau (4) par lequel chacun des cadres (1) peut être suspendu à un appareil de transport par voie aérienne, non représenté, tel qu'un pont roulant ou un convoyeur. Selon l'invention, il est prévu que tous les cadres renfermant un même groupe de tubes puissant être suspendus simultanément à un tel appareil de transport aérien.

Comme on le voit sur les fig. 1 à 3, les cadres (1) sont mis en place sur un ensemble de tubes (5) agencé en une nappe vertikcale unique, l'écartement entre les branches latérales (2) des cadres correspondant comme on le voit le mieux sur la fig. 2 au diamètre extérieur des tubes (5) afin précisément de permettre cet empilement en une nappe verticale unique.

Chacun des cadres (1) présente au voisinage des extrémités libres des branches latérales (2), comme on le voit le mieux sur les fig. 2 et 3, des orifices (6) pour le passage d'un élément tel qu'une goupille (7), susceptible d'être insérée dans les orifices (6) et permettant la retenue des tubes (5) à l'intérieur des cadres alignés (1). L'élément en forme de goupille (7) peut avantageusement être agencé, comme on le voit le mieux sur la fig. 3, pour pouvoir tourner entre une position de verrouillage pendant le transport des tubes et une position de déverrouillage permettant de retirer le goupille lorsque les tubes doivent être libérés au poste d'arrivée comme cela sera expliqué plus loin.

Dans ce mode de réalisation des fig. 1 à 3, en position de transfert des tubes, chacun des cadres est disposé avec son extrémité ouverte, en travers de laquelle est disposée la goupille (7), dirigée vers le bas.

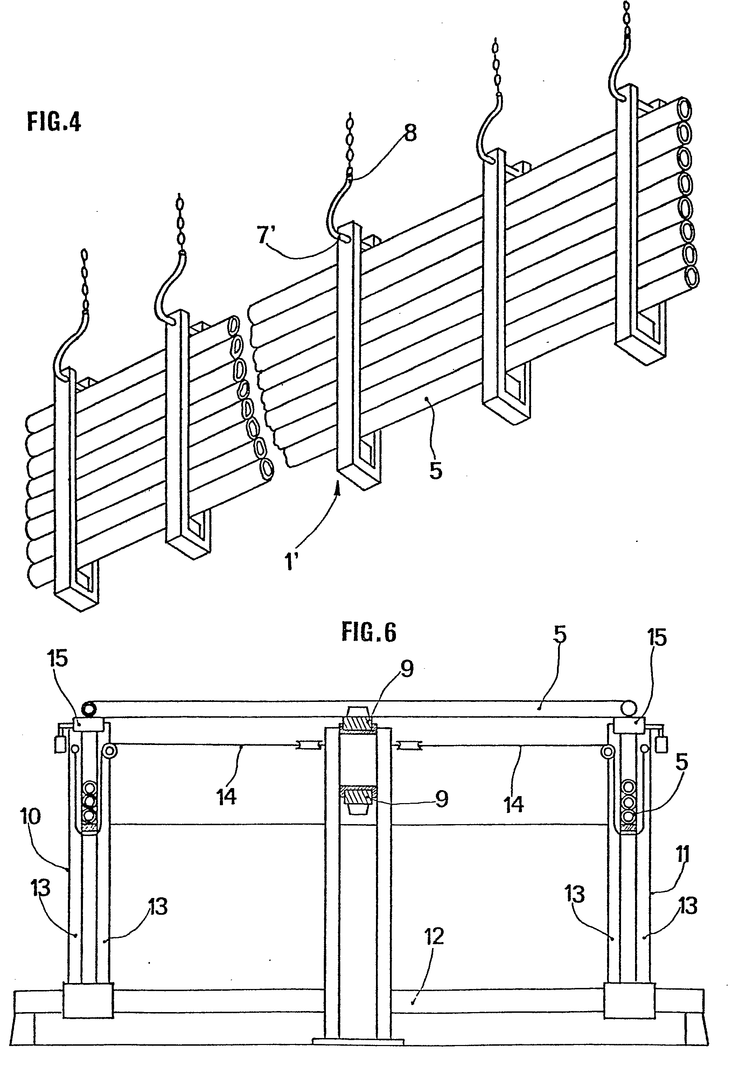

Dans la variante de réalisation représentée à la fig. 4, les cadres (1') sont disposés en position inversée, c'est-à-dire que leur extrémité ouverte, en position de transfert des tubes, est tournée vers le haut, et l'élément analogue à une goupille (7') s'engagement dans des orifices au voisinage de l'extrémité libre des branches latérales des cadres, est réalisé d'un seul tenant avec un crochet (8) pour la suspension du cadre à un appareil de transport aérien.

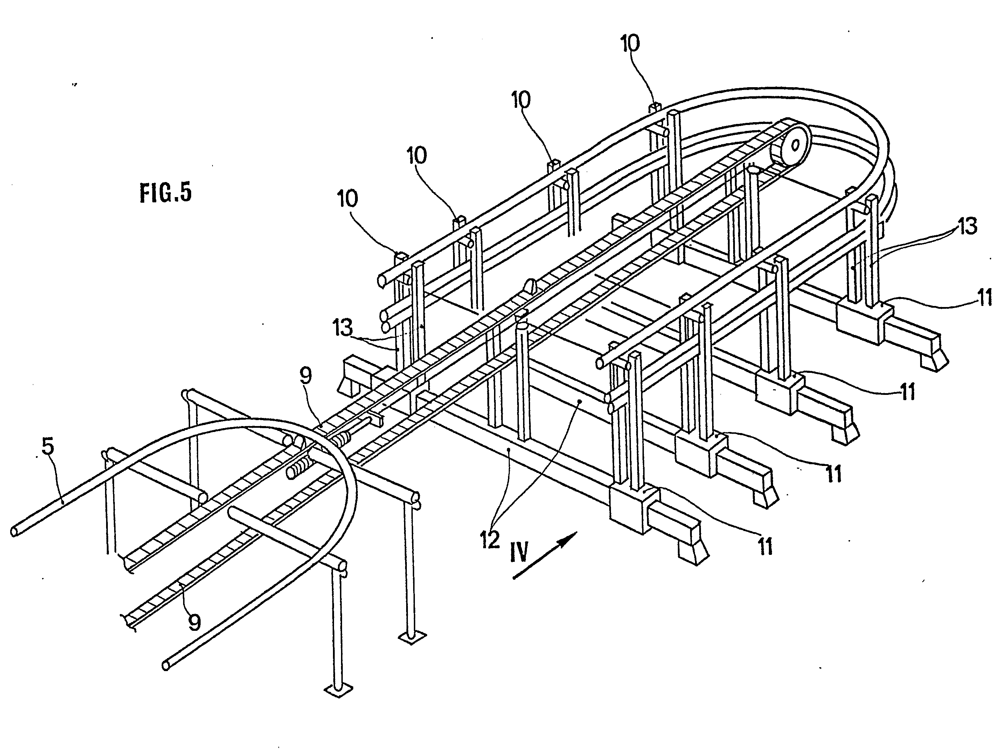

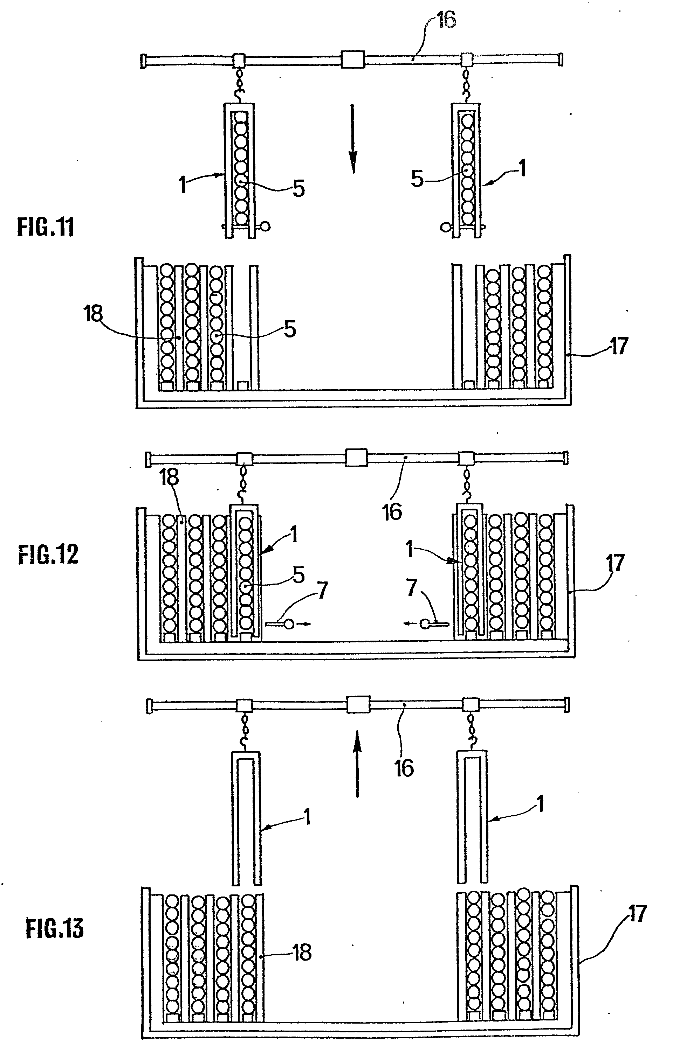

On va maintenant décrire en se référant aux fig. 5 à 15, un mode de mise en œuvre du procédé selon l'invention, utilisant le dispositif décrit aux fig. 1 à 3, dans une application particulière de transport de tubes cintrés à 180° depuis un poste constituant la fin de la chaîne de fabrication et illustré à la fig. 5, et un poste de colisage dans lequel les tubes sont empilés dans des caisses de type conventionnel prévues à cet effet, comme illustré aux fig. 11 à 15.

Les tubes cintrés (5) sont amenés en fin de fabrication, après les contrôles d'usage, par tout moyen approprié, notamment un convoyeur à taquets (9) à l'aplomb de deux ensembles de gabarits (10) et (11), les gabarits de chacun des ensembles étant mobiles vers et à l'écart des gabarits de l'autre ensemble, transversalement par rapport à la direction d'avance du convoyeur sur des rails transversaux (12). L'écartement entre les gabarits (10) et (11) peut ainsi être ajusté à volonté en fonction du rayon de cintrage des tubes à empiler.

En variante l'un des ensembles de gabarits pourrait être fixe et l'autre mobile vers et à l'écart de lui.

Chacun des gabarits est constitué de deux montants verticaux (13) dont l'écartement mutuel est de préférence réglable pour s'adapter aux différents diamètres de tubes.

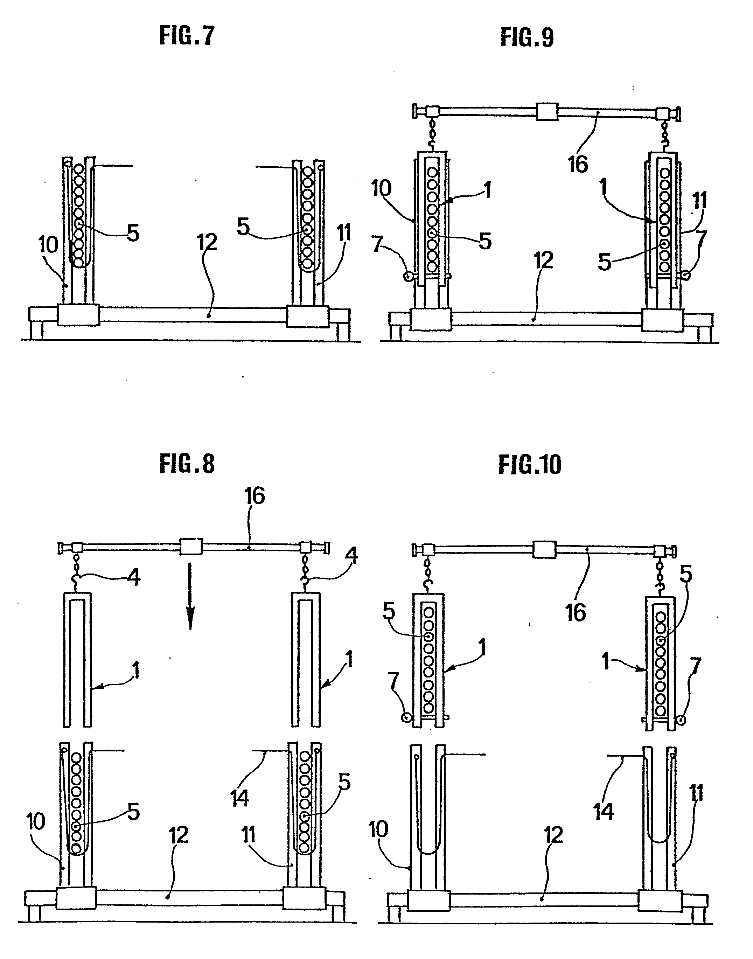

La mise en place des tubes dans les gabarits peut s'effectuer manuellement ou par tout autre moyen approprié, mais dans un exemple particulier de réalisation représenté aux fig. 5 à 7, on utilise un câble (14) reliant les gabarits et qui, comme on le voit le mieux sur la fig. 6, permet de recevoir les différents tubes (5) amenés au poste d'empilage, chacun des tubes venant s'engager dans les gabarits au-desses du câble (14) après escamotage d'un rouleau éclipsable (15). Grâce à une commande appropriée, notamment par vérin, la longueur du câble (14) est augmentée d'une valeur prédéterminée pour chaque tube alimenté de façon à permettre une descente pas à pas des tubes dans les gabarits. On assure ainsi un empilement des tubes dans les gabarits, selon une nappe verticale.

On amène alors comme schématisé sur la fig. 8, une pluralité de cadres (1) suspendus par paires à des palonniers (16) de pont roulant ou appareil de transport aérien analogue. Comme schématisé sur la fig. 8, les cadres (1) sont descendus de façon à venir se disposer par-dessus la nappe de tubes (5) empilés dans les gabarits (10—11) jusqu'à venir dans la position illustrée à la fig. 9 dans laquelle on introduit les goupilles de blocage (7).

On soulève alors comme schématisé en (10) la nappe de tubes (5) mise en place dans les cadres (1) et on la déplace jusqu'à l'amener à l'aplomb d'une caisse (17) de réception de tubes, qui comporte des cales de positionnement (18) pour séparer les groupes de tubes de rayons de cintrage différents.

Depuis la position représentée à la fig. 11, on descend la nappe de tubes maintenue dans les cadres (1) jusqu'à la position représentée à la fig. 12 où l'extrémité libre des cadres (1) vient au voisinage du fond de la caisse, après quoi on libère les goupilles (7) et, comme représenté à la fig. 13, on remonte les cadres vides (1) que l'appareil de transport aérien ramène à l'aplomb du poste de départ.

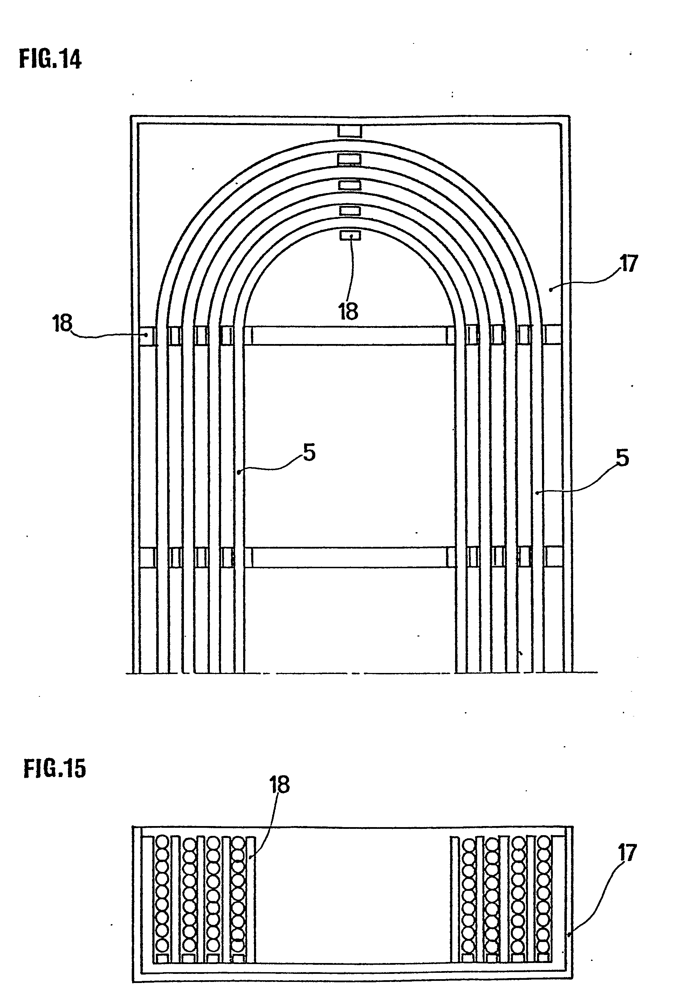

Selon l'invention, on recommence la même opération pour chaque groupe de tubes de même rayon de cintrage, les tubes d'un même groupe étant ainsi transportés en nappe verticale en une ou plusieurs fois et mis en place à l'emplacement correspondant dans la caisse jusqu'à remplir tous les compartiments de celle-ci ménagés entre les cales de positionnement (18) comme illustré aux fig. 14 et 15.

Bien que l'invention ait été décrite en liaison avec une application particulière à des tubes cintrés, il est évident qu'elle n'y est nullement limitée, et qu'on peut la mettre en œuvre avec des tubes ou produits longs de caractéristiques quelconques. De même, il est bien évident que l'invention n'est nullement limitée au transfert, pour leur mise en caisse, de tubes, mais qu'elle est utilisable pour transférer des tubes entre deux postes de travail quelconques.

**Revendications**

1. Procédé pour transférer des produits longs (5) tels que des tubes ou des barres de longueur et de forme quelconques d'un poste de travail de départ à un autre poste de travail d'arrivée dans lequel on met en œuvre un dispositif de transfert à l'intérieur duquel est constituée une nappe unique de produits longs (5) de mêmes caractéristiques, ledit dispositif de transfert étant pourvu de moyens de retenue libérables (7—7') des produits longs et de moyens de suspension (4) à un appareil de transport par voie aérienne, on soulève la nappe de produits longs ainsi maintenue et on la transporte verticale par voie aérienne jusqu'au poste d'arrivée, caractérisé en ce qu'on empile au poste de départ les produits longs (5) de façon à former la nappe verticale unique destinée à être placée à l'intérieur du dispositif de transfert et que le dispositif de transfert est constitué d'une pluralité de cadres rigides (1-1') en forme de U que l'on met en place sur la nappe de produits longs (5) préalablement formée, lesdits cadres en U étant répartis sur la longueur des produits longs, les moyens de retenue libérables (7-7') que comportent les cadres en U étant actionnés de façon à assurer le maintien de la nappe verticale de produits longs insérés à l'intérieur desdits cadres.

2. Procédé selon la revendication 1, caractérisé en ce qu'on libère les produits longs des cadres du dispositif de transfert au poste d'arrivée.

3. Procédé selon la revendication 2, caractérisé en ce que les produits longs sont des tubes cintrés à 180° et que le poste d'arrivée est un poste de colisage où ces tubes sont mis en caisse.

4. Dispositif de transfert pour la mise en œuvre du procédé selon l'une quelconque des revendications 1 à 3, caractérisé en ce qu'il comporte une pluralité de cadres (1-1') présentant une forme de U dont la largeur intérieure entre les branches (2) correspond au diamètre des tubes (5) ou des barres à manipuler, lesdits cadres étant munis de moyens pour leur suspension (4) à un appareil de transport par voie aérienne, ainsi que de moyens de retenue libérables (7-7') des tubes ou barres.

5. Dispositif de transfert selon la revendication 4, caractérisé en ce que les moyens de retenue libérables des tubes ou barres dans chaque cadre comprennent une pièce en forme de goupille (7) susceptible d'être mise en place au voisinage de l'extrémité ouverte du cadre en forme de U et en travers de celle-ci.

6. Dispositif de transfert selon la revendication 4 ou 5, caractérisé en ce que l'extrémité ouverte du cadre en forme de U est tournée vers le bas.

7. Dispositif de transfert selon la revendication 4 ou 5, caractérisé en ce que l'extrémité ouverte du cadre en forme de U est tournée vers le haut et que le moyen de reteneu libérable (7') est solidaire d'un moyen de suspension (8).

8. Dispositif transfert selon l'une des revendications 4 à 7, caractérisé en ce qu'il comporte en outre au poste de départ une pluralité de gabarits alignés (10) constitués chacun de deux montants verticaux (13) aptes à former une nappe verticale unique, chacun des gabarits comportant de préférence des moyens pour guider la descente des produits longs à empiler.

9. Dispositif de transfert selon la revendication 8 pour la réception de tubes cintrés à 180°, caractérisé en ce qu'il comporte deux ensembles de gabarits mobiles (10—11) transversalement l'un par rapport à l'autre.

**Patentansprüche**

1. Verfahren zum Übertragen von langen Produkten,

— etwa von Rohren oder Stäben von beliebiger Länge und Form, von einer Ausgangsarbeitsstation zu einer Ankunftsarbeitsstation, bei dem
    — eine Transportvorrichtung in Betrieb genommen wird, in der ein einziges Bündel von langen Produkten (5) mit denselben Eigenschaften gebildet ist, wobei die Fördervorrichtung mit lösbaren Haltemitteln (7—7') für die langen Produkte und mit Aufhängemitteln (4) zum Aufhängen an einem durch eine Hängebahn gebildeten Transportgerät versehen ist,
    — das auf diese Weise erhaltene Bündel von langen Produkten angehoben und durch eine Hängebahn bis zur Ankunftsstation senkrecht transportiert wird,

gekennzeichnet

— durch Stapeln der langen Produkte (5) an der Ausgangsstation derart, daß das einzige senkrechte Bündel gebildet wird, das in der Transportvorrichtung angeordnet werden soll,
— wobei die Transportvorrichtung aus einer Vielzahl von U-förmigen starren Rahmen (1—1') besteht, die auf das vorher gebildete Bündel aus langen Produkten (5) aufgesetzt werden,
— wobei die U-förmigen Rahmen auf der Längserstreckung der langen Produkte verteilt werden,
— wobei die lösbaren Haltemittel (7—7') der U-förmigen Rahmen derart betätigt werden, daß sie das Halten des senkrechten Bündels aus langen Produkten gewährleisten, die in den Innenraum der Rahmen eingesetzt sind.

2. Verfahren nach Anspruch 1, gekennzeichnet

— durch Lösen der langen Produkte von den Rahmen der Transportvorrichtung an der Ankunftsstation.

3. Verfahren nach Anspruch 2, dadurch gekennzeichnet,

— daß die langen Produkte um 180° gebogene Rohre sind und
— daß die Ankunftsstation eine Verpackungsstation ist, an der die Rohre in Kisten gegeben werden.

4. Transportvorrichtung zur Durchführung des Verfahrens nach einem der Ansprüche 1 bis 3, gekennzeichnet

— duch mehrere U-förmige Rahmen, deren Innenbreite zwischen den Schenkeln (2) dem Durchmesser der handzuhabenden Rohre (5) oder Stangen entspricht,
— wobei die Rahmen mit Mitteln (4) zu ihrer Aufhängung an einem Hängebahn-Transportgerät und mit lösbaren Haltemitteln (7—7') für die Rohre oder Stangen versehen sind.

5. Transportvorrichtung nach Anspruch 4, dadurch gekennzeichet,

— daß die lösbaren Haltemittel für die Rohre oder Stangen in jedem Rahmen ein stiftförmiges Teil (7) aufweisen, das in Nähe des offenen Endes des U-förmigen Rahmens quer zu diesem angebracht werden kann.

6. Transportvorrichtung nach Anspruch 4 oder 5, dadurch gekennzeichnet,

— daß das offene Ende des U-förmigen Rahmens nach unten gewendet ist.

7. Transportvorrichtung nach Anspruch 4 oder 5, dadurch gekennzeichnet,

— daß das offene Ende des U-förmigen Rahmens nach oben gewendet ist und
— daß die lösbaren Haltemittel (7') mit Aufhängemitteln (8) verbunden sind.

8. Transportvorrichtung nach einem der Ansprüche 4—7, dadurch gekennzeichnet,

— daß sie außer der Ausgangsstation mehrere ausgefluchtete Schablonen (10) aufweist, die jeweils aus zwei senkrechten Ständern (13) bestehen, die ein einziges senkrechtes Bündel bilden können,
— wobei jede der Schablonen vorzugsweise Mittel aufweist zum Führen der Abwärtsbewegung der zu stapelnden langen Produkte.

9. Transportvorrichtung nach Anspruch 8 zur Aufnahme von um 180° gebogenen Rohren, gekennzeichnet

— durch zwei Anordnungen von quer zueinander beweglichen Schablonen (10—11).

**Claims**

1. A process for transferring long products (5) such as tubes or bars of any length and shape from an outgoing working station to another incoming working station, wherein use is made of a transfer device within which a single layer of long products (5) having the same characteristics is formed, said transfer device being provided with releasable means (7—7') for retaining the long products and means (4) for suspension from an aerial conveyor apparatus, the layer of long products which is thus supported is raised and is aerially transported in a vertical position to the incoming station, characterised in that the long products (5) are stacked at the outgoing station so as to form the single vertical layer which is intended to be placed within the transfer device and that the transfer device comprises a plurality of rigid frames (1—1') of U-shape which are set in position on the previously formed layer of long products (5), said U-shape frames being distributed over the length of the long products, the releasable retaining means (7—7') that the U-shape frames carry being actuated so as to ensure that the vertical layer of long products which are inserted within said frames is maintained.

2. A process according to claim 1 characterised in that the long products are freed from the frames of the transfer device at the incoming station.

3. A process according to claim 2 characterised in that the long products are tubes which are bent over through 180° and that the incoming station is a packing station where the tubes are boxed.

4. A transfer device for carrying out the process according to any one of claims 1 to 3 characterised in that it comprises a plurality of frames (1—1') which are of a U-shaped configuration and whose internal width between the arms (2) thereof corresponds to the diameter of the tubes (5) or the bars to be handled, said frames being provided with means (4) for suspending them from an aerial conveyor apparatus, and releasable means (7—7') for retaining the tubes or bars.

5. A transfer device according to claim 4 characterised in that the means for retaining the tubes or bars in each frame comprise a keeper pin-like member (7) which can be set in position in the vicinity of the open end of the U-shape frame and across said end.

6. A transfer device according to claim 4 or claim 5 characterised in that the open end of the U-shape frame is directed downwardly.

7. A transfer device according to claim 4 or claim 5 characterised in that the open end of the U-shape frame is directed upwardly and the releasable retaining means (7') is fixed to a suspension means (8).

8. A transfer device according to one of claims 4 to 7 characterised in that it further comprises at the outgoing station a plurality of aligned outline setting members (10) each formed by two vertical uprights (13) capable of forming a single vertical layer, each of the outline setting members preferably comprising means for guiding the downward movement of the long products to be stacked.

9. A transfer device according to claim 8 for receiving tubes which are bent through 180° characterised in that it comprises two arrays of outline setting members (10, 11) which are movable transversely with respect to each other.

FIG.1

FIG.2

FIG.3

**FIG.4**

**FIG.6**

FIG.5

FIG.11

FIG.12

FIG.13

**FIG.14**

17

18

18

5

5

**FIG.15**

18

17